**Europäisches Patentamt**

**European Patent Office**

**Office européen des brevets**

(19)

(11) Veröffentlichungsnummer : **0 379 126 B1**

(12)

# EUROPÄISCHE PATENTSCHRIFT

(45) Veröffentlichungstag der Patentschrift :
**24.05.95 Patentblatt 95/21**

(51) Int. Cl.$^6$ : **G02B 6/44**

(21) Anmeldenummer : **90100782.3**

(22) Anmeldetag : **16.01.90**

(54) **Lichtwellenleiterkabel.**

(30) Priorität : **20.01.89 DE 3901610**

(43) Veröffentlichungstag der Anmeldung :
**25.07.90 Patentblatt 90/30**

(45) Bekanntmachung des Hinweises auf die
Patenterteilung :
**24.05.95 Patentblatt 95/21**

(84) Benannte Vertragsstaaten :
**AT BE CH ES FR GB IT LI LU NL**

(56) Entgegenhaltungen :
**EP-A- 0 020 036
EP-A- 0 277 515
DE-A- 2 723 659
DE-A- 3 108 381**

(56) Entgegenhaltungen :
**GB-A- 2 064 811
PATENT ABSTRACTS OF JAPAN, Band 12, Nr.
488 (P-803)[3335], 20. Dezember 1988 ; & JP-
A-63 201 610
PATENT ABSTRACTS OF JAPAN, Band 12, Nr.
488 (P-803)[3335], 20. Dezember 1988 ; & JP-
A-63 201 611**

(73) Patentinhaber : **ANT Nachrichtentechnik
GmbH
Gerberstrasse 33
D-71522 Backnang (DE)**

(72) Erfinder : **Lenge, Norbert, Dr. rer. nat.
Fliederweg 18
D-7592 Renchen (DE)**
Erfinder : **Böhle, Wilfried, Dipl.-Ing.
Tannweg 5
D-7600 Offenburg (DE)**

Anmerkung : Innerhalb von neun Monaten nach der Bekanntmachung des Hinweises auf die Erteilung
des europäischen Patents kann jedermann beim Europäischen Patentamt gegen das erteilte europäische Patent Einspruch einlegen. Der Einspruch ist schriftlich einzureichen und zu begründen. Er gilt
erst als eingelegt, wenn die Einspruchsgebühr entrichtet worden ist (Art. 99(1) Europäisches Patentübereinkommen).

## Beschreibung

Die Erfindung betrifft ein Lichtwellenleiterkabel nach dem Oberbegriff des Patentanspruches 1.

Ein typischer Aufbau eines Lichtwellenleiterkabels geht aus der Lieferübersicht Lichtwellenleiterkabel der ANT Nachrichtentechnik GmbH vom Dezember 1986 Seite 8 hervor. Auf einem Stützelement sind Lichtwellenleiter-Adern aufgebracht. Die Lichtwellenleiter-Adern können einen oder mehrere Lichtwellenleiter enthalten. Im letzten Fall bezeichnet man sie als Bündeladern. Die Kabelseele weist neben Lichtwellenleiter-Adern und Stützelement in vielen Fällen auch Blindelemente und Kupferbeiläufe auf. Zur Längswasserdichtheit ist die Kabelseele meist mit Petrolat oder einem Gel gefüllt. Über der Kabelseele ist eine Seelenbewicklung aufgebracht. Eine Zugentlastung ist vorgesehen. Ein Kabelmantel schützt das Kabel vor äußeren Belastungen. Die Lichtwellenleiter werden zusätzlich durch die Aderhüllen geschützt.

Aus der DE 27 23 659 C2 ist ein Kabel bekannt, bei dem ein oder mehrere von einem losen Mantel umgebene Lichtwellenleiter um ein zentrales Element verseilt sind. Die Drehrichtung der Verseilung wechselt in periodischen Abständen. Die Lichtwellenleiter-Adern werden durch eine Haltewendel auf dem zentralen Element gehalten.

Wenn an einer Stelle ein Signal in ein Lichtwellenleiterkabel ein- oder ausgekoppelt werden soll, also eine Kabelabzweigung hergestellt werden soll, so wird das Lichtwellenleiterkabel an dieser Stelle durchtrennt und die einzelnen Lichtwellenleiter der Kabelteile direkt miteinander verspleißt oder über Koppelelemente miteinander oder mit weiteren Lichtwellenleiter verbunden. Falls nur in einen Lichtwellenleiter ein Signal ein- oder ausgekoppelt werden soll, ist der Aufwand zum Durchtrennen und Verspleißen der einzelnen Lichtwellenleiter des Kabels sehr groß.

Aus der DE 31 08 381 C2 ist ein Kabel bekannt, bei dem Bündeladern zusammen mit Hilfselementen mit wechselnder Drallrichtung auf einen zentralen Kern aufgeseilt und von einem Mantel umgeben sind. Die Bündeladern und Hilfselemente werden dabei derart durch eine Umwicklung auf dem Kern gehalten, daß an einer Kabeltrennstelle durch Längszug an mindestens einem der Hilfselemente einer Lage die Verseilung aller in dieser Lage befindlichen BündeLadern und Hilfselemente zur Bildung von überlängen aufhebbar ist. Im Bedarfsfall erhält man so an einer Kabeltrennstelle eine Reservelänge.

Falls jedoch nur von einem Lichtwellenleiter eine überlänge benötigt wird, so muß trotzdem für alle Lichtwellenleiter einer Lage die Verseilung aufgelöst werden. Die Lichtwellenleiter-Adern sind dann an dieser Stelle nicht mehr durch den Kabelmantel geschützt.

Der Erfindung liegt die Aufgabe zugrunde, ein Lichtwellenleiterkabel der im Oberbegriff des Patentanspruches 1 beschriebenen Art anzugeben, aus dem eine einzelne Lichtwellenleiter-Ader mit Überlänge bereichsweise entnehmbar ist.

Diese Aufgabe wird dadurch gelöst, daß das Lichtwellenleiterkabel die im kennzeichnenden Teil des Anspruches 1 aufgeführten Merkmale aufweist.

Vorteilhafte Weiterbildungen sind in den Unteransprüchen angegeben.

Der Erfindung liegen folgende Überlegungen zugrunde: Um Spleißaufwand zu sparen, ist es am einfachsten nicht alle Lichtwellenleiter zu durchtrennen. Es wird also nicht das gesamte Kabel durchtrennt, sondern das Kabel wird so weit abgesetzt, daß die Lichtwellenleiter-Adern zugänglich sind. Das Kabel wird also bis auf die Kabelseele abgesetzt. Die Lichtwellenleiter-Adern müssen derart auf dem Stützelement aufgebracht sein, daß nach dem Absetzen eines Bereiches des Lichtwellenleiterkabels eine ausreichende Zusatzlänge der Lichtwellenleiter-Ader zur Verfügung steht. Die Zusatzlänge muß so groß sein, daß die Lichtwellenleiter-Ader abgesetzt werden kann und zumindest ein Lichtwellenleiter mit einem Koppelelement verbunden werden kann.

Eine ausreichende Zusatzlänge wird erfindungsgemäß dadurch erzeugt, daß die Lichtwellenleiter-Adern wellenartig um jeweils eine Grundlinie angeordnet sind und die Grundlinien auf der Oberfläche des Stützelements angeordnet sind. Aus der GB 20 64.811 A ist es an sich bekannt, die Nuten eines Nutenkabels wellenartig um eine Grundlinie anzuordnen. Die Lichtwellenleiter sind in den Nuten untergebracht. Eine Entnahme der ungeschützten Lichtwellenleiter ist ohne Beschädigung der Lichtwellenleiter nur schwer möglich, bzw. das Herausziehen der Lichtwellenleiter unter der Seelenbewicklung über eine Länge von mehreren Wellenperioden ist überhaupt nicht möglich. Außerdem ist ein kompliziertes Zentralelement notwendig. Ein solches Kabel ist zur Herstellung von Kabelabzweigungen ungeeignet.

Die wellenartige Anordnung der Lichtwellenleiter-Adern im erfindungsgemäßen Kabel kann sowohl nur bereichsweise, für die Bereiche in denen eine Einkopplung vorgenommen werden soll, als auch über die gesamte Kabellänge durchgeführt werden. Beim wellenartigen Aufbringen der Lichtwellenleiter-Adern ist zu beachten, daß der minimal zulässige Krümmungsradius für Lichtwellenleiter nicht unterschritten wird. Um die Lichtwellenleiter-Adern entnehmen zu können, bringt man die Lichtwellenleiter-Adern derart auf das Stützelement auf, daß sie über eine Länge von einigen Wellenperioden unter der Seelenbewicklung herausziehbar sind.

Um die Lichtwellenleiter-Adern herausziehen zu können, muß das Lichtwellenleiterkabel die in Anspruch 1 beschriebenen Merkmale aufweisen. Eine Lichtwellenleiter-Ader kann dann über eine Länge von einigen Wellenperioden unter der Seelenbewicklung herausgezogen werden, ohne die Lage weiterer Lichtwellenleiter-Adern zu verändern. Die Aderhüllen bieten beim Herausziehen Schutz für die Lichtwellenleiter.

Die Lichtwellenleiter-Adern können neben der wellenartigen Anordnung zusätzlich mit einem sehr großen Schlag um das Stützelement verseilt sein. Dies wird dadurch erreicht, daß die Grundlinien wendelförmig auf der Oberfläche des Stützelementes angeordnet sind. Wenn mehrere Lichtwellenleiter-Adern in einem Kabel untergebracht werden, können die jeweiligen Grundlinien gleichmäßig auf den Umfang des Stützelements verteilt werden, oder gleich nebeneinander angeordnet werden. Zugentlastungselemente sind zur Zugentlastung des Kabels vorgesehen. Sie können entweder im Stützelement oder außerhalb der Kabelseele angebracht werden. Die Zwischenräume in der Kabelseele werden mit Gel oder Petrolat oder einem quellfähigen Material gefüllt, um ein längswasserdichtes Kabel zu erhalten.

Trotz der komliziert anmutenden Anordnung der Lichtwellenleiter-Adern auf dem zentralen Stützelement, ist es möglich die Lichtwellenleiter-Adern mit einer üblichen Verseilmaschine aufzubringen. Das Herstellungsverfahren des Lichtwellenleiterkabels wird also nicht erschwert. Anhand der Zeichnungen werden Ausführungsbeispiele der Erfindung erläutert. Es zeigen:

| | |
|---|---|
| Figur 1 | Ansicht der Kabelseele des Lichtwellenleiterkabels mit herausziehbaren Lichtwellenleiter-Adern, |
| Figur 2 | Schema zur Berechnung der Bogenlänge der Lichtwellenleiter-Adern, |
| Figur 3 | Querschnitt durch ein zentrales Stützelement mit Lichtwellenleiter-Adern, |
| Figur 4 | Querschnitt durch ein Lichtwellenleiterkabel mit herausziehbaren Lichtwellenleiter-Adern, |

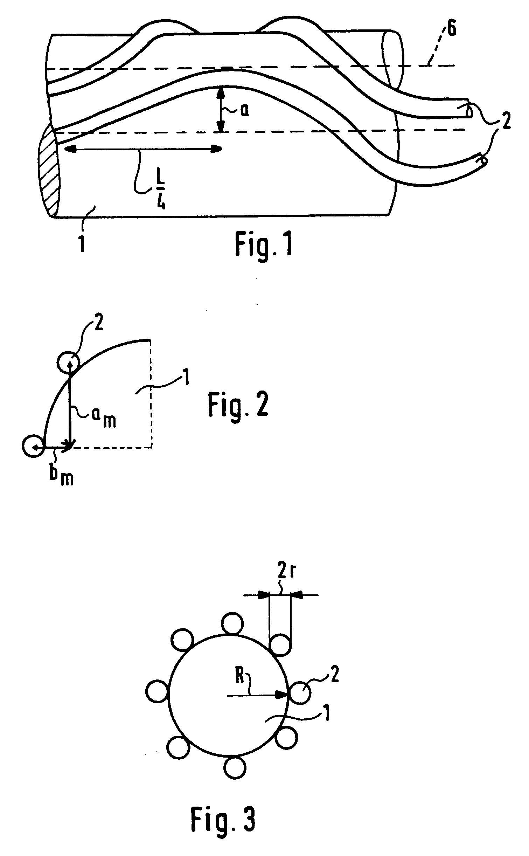

Die Figuren 1 bis 4 beziehen sich auf ein Lichtwellenleiterkabel, dessen Lichtwellenleiter-Adern sich an einem abgesetzten Bereich des Kabels über eine Teillänge aus dem Kabel herausziehen lassen. In Figur 1 ist ein zentrales Stützelement 1 zu sehen, auf das zwei Lichtwellenleiter-Adern 2 aufgebracht sind. Die Lichtwellenleiter-Adern haben den Radius r, das Stützelement 1 den Radius R. Die Lichtwellenleiter-Adern 2 sind wellenförmig um jeweils eine Grundlinie 6 angeordnet, die parallel zur Symmetrieachse des Stützelementes 1 verläuft. Die Welle wird von der Grundlinie 6 in zwei Halbwellen geteilt, die deckungsgleich sind. Neben der Krümmung der Lichtwellenleiter-Adern 2 durch die wellenförmige Anordnung, sind die Lichtwellenleiter-Adern um das Stützelement 1 gekrümmt. Der maximale Abstand einer Lichtwellenleiter-Ader 2 von der zugehörigen Grundlinie 6 beträgt a, der minimale Abstand einer Lichtwellenleiter-Ader 2 zu einer benachbarten Grundlinie beträgt r. Der Abstand a resultiert aus der Anzahl der Lichtwellenleiter-Adern 2 und dem Radius des Stützelements 1. Es ist darauf zu achten, daß der minimal zulässige Krümmungsradius für Lichtwellenleiter nicht unterschritten wird. Der minimale Abstand zu einer benachbarten Grundlinie wird dadurch definiert, daß beim Herausziehen einer Lichtwellenleiter-Ader 2, also beim Glattziehen einer Lichtwellenleiter-Ader 2 über einer bestimmten Bereich, die benachbarten Lichtwellenleiter-Adern nicht verschoben werden sollen. Wenn man auf dem Umfang U acht Lichtwellenleiter-Adern unterbringt, ergibt sich:

$$U = 2 \cdot \pi \cdot (R + r) = 8 \cdot (3 \cdot r + a).$$

Der Abstand zwischen zwei Lichtwellenleiter-Adern beträgt a + r und ist auf der gesamten Kabellänge konstant. Figur 3 zeigt einen Querschnitt durch das Stützelement 1 und acht Lichtwellenleiter-Adern 2, wenn diese gleichmäßig auf den Umfang des Stützelementes 1 verteilt sind. Die Bogenlänge S der Lichtwellenleiter-Ader für eine Wellenlänge L beträgt

$$S = 4 \cdot (a_m^2 + b_m^2 + (L/4)^2)^{1/2} \cdot E\left(\phi/\frac{\pi}{2}\right)$$

wobei $a_m$, $b_m$ wie in Figur 2 dargestellt definiert sind und $E\left(\phi/\frac{\pi}{2}\right)$ ein vollständiges elliptisches Integral der 2. Art ist. Geht man von den folgenden Radien für Lichtwellenleiter-Ader und Stützelement aus

r = 0,7 mm

R = 13,1 mm

und beträgt die Wellenlänge L = 80 mm so folgt, daß die Bogenlänge S = 85 mm ist. Es ergibt sich also eine Zusatzlänge der Lichtwellenleiter-Ader im Lichtwellenleiterkabel von ca. 6,6 %. Der minimale Krümmungsradius ρ der Lichtwellenleiter-Ader und somit der Lichtwellenleiter beträgt ungefähr

$$\rho = (L/4)^2 / ((a_m^2 + b_m^2)^{1/2}) \approx 100 \text{ mm}$$

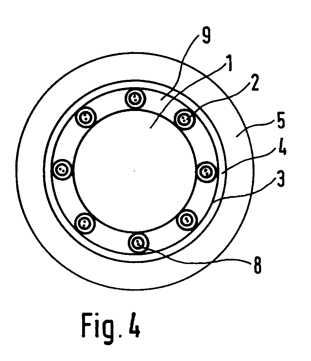

Der maximal mögliche Arbeitsbereich liegt bei Zugbeanspruchung für obiges Beispiel bei ca. 1,4 % und bei Druckbeanspruchung bei ca. 1,5 %. Der generell angestrebte Wert für den Arbeitsbereich wird somit sogar überschritten. Figur 4 zeigt einen Querschnitt durch ein erfindungsgemäßes Lichtwellenleiterkabel. Das Stützelement 1 mit R = 13,1 mm ist von acht Hohladern 2 mit je zwei Fasern und r = 0,7 mm umgeben. Die maximalen Abstände der Hohladern 2 von der jeweiligen Grundlinie betragen 3,3 mm. Das Stützelement 1 und die Hohladern 2 bilden die Kabelseele. Die Kabelseele ist von einer Seelenbewicklung 3 umgeben. Die Zwischenräume in der Kabelseele sind mit Petrolat 9 gefüllt. Als Seelenbewicklung 3 wird eine Folie verwendet. Die Hohladern 2 werden durch die Seelenbewicklung 3 in ihrer Lage fixiert. Die Fixierung erfolgt derart, daß die Hohladern bei der Erstellung eines Kabelabzweigs über zwei bis drei Wellenperioden beidseitig glattgezogen werden können, sich aber beispielsweise beim Verlegen des Lichtwellenkabels die Hohladern 2 nicht verschieben. Die Hohladern 2 haben zur leichteren Identifikation alle unterschiedlich gefärbte Hüllen. Auf der Seelenbewicklung 3 sind Zugentlastungselemente 4 aufgebracht. Ein Kabelmantel 5 schützt das Lichtwellenkabel vor äußeren Einwirkungen. Der Außendurchmesser des Lichtwellenkabels beträgt ca. 35 mm.

Im Unterschied zu diesem Beispiel können die Lichtwellenleiter-Adern auch auf dem Stützelement festgeklebt werden, wobei die Verklebung jedoch leicht lösbar sein muß, damit die Lichtwellenleiter-Adern aus dem Kabel herausziehbar sind.

**Patentansprüche**

1.  Lichtwellenleiterkabel mit den folgenden Merkmalen:

    a) das Lichtwellenleiterkabel weist ein zentrales Stützelement (1) auf;

    b) um das Stützelement (1) sind mehrere Lichtwellenleiter-Adern (2) mit je mindestens einem Lichtwellenleiter (LWL) (8) zumindest bereichsweise mit sich periodisch ändernder Verseilrichtung verseilt, wobei die LWL-Adern (2) wellenartig um jeweils eine gedachte Grundlinie (6) angeordnet sind, wobei sich diese Grundlinien (6) entlang der Oberfläche des Stützelements (1) erstrecken und die LWL-Adern (2) die jeweils zugehörende Grundlinie (6) immer abwechselnd einmal von links und einmal von rechts kreuzen;

    c) über den LWL-Adern (2) ist eine Seelenbewicklung (3) angeordnet;

    d) über der Seelenbewicklung ist ein Kabelmantel (5) angeordnet; gekennzeichnet durch die folgenden anderen Merkmale:

    e) die LWL-Adern sind auf dem Umfang des Stützelements (1) mit Abstand zueinander verteilt;

    f) die LWL-Adern (2) sind um das Stützelement derart wellenartig verseilt, daß sie die zu benachbarten LWL-Adern gehörigen Grundlinien (6) nicht kreuzen;

    g) die Fixierung der LWL-Adern (2) auf dem Stützelement (1) durch die Seelenbewicklung (3) erfolgt derart, daß eine LWL-Ader (2) über eine Länge von einigen Wellenperioden (L) unter der Seelenbewicklung (3) herausziehbar ist, aber daß sich die LWL-Adern (2) beim Verarbeiten des Lichtwellenleiterkabels nicht unter der Seelenbewicklung (3) verschieben.

2.  Lichtwellenleiterkabel nach Anspruch 1, dadurch gekennzeichnet, daß die Grundlinien (6) auf den Umfang des Stützelements (1) gleichmäßig verteilt sind.

3.  Lichtwellenleiterkabel nach einem der Ansprüche 1 oder 2, dadurch gekennzeichnet, daß die Grundlinien (6) parallel zur Längsachse des Stützelements (1) angeordnet sind.

4.  Lichtwel Lenleiterkabel nach einem der Ansprüche 1 oder 2, dadurch gekennzeichnet, daß die Grundlinien (6) wendelförmig auf der Oberfläche des Stützelements (1) angeordnet sind.

5.  Lichtwellenleiterkabel nach einem der bisherigen Ansprüche, dadurch gekennzeichnet, daß Zugentlastungselemente (4) vorgesehen sind.

6.  Lichtwellenleiterkabel nach Anspruch 5, dadurch gekennzeichnet, daß die Zugentlastungselemente (4) im Stützelement (1) integriert sind.

7.  Lichtwellenleiterkabel nach Anspruch 5, dadurch gekennzeichnet, daß die Zugentlastungselemente (4) auf der Seelenbewicklung (3) aufgebracht sind.

8.  Lichtwellenleiterkabel nach einem der bisherigen Ansprüche, dadurch gekennzeichnet, daß die Zwischenräume zwischen den Lichtwellenleiter-Adern (2) mit einem Gel oder Petrolat (9) gefüllt sind.

9.  Licht Lichtwellenleiterkabel nach einem der bisherigen Ansprüche, dadurch gekennzeichnet, daß eine Folie als Seelenbewicklung (3) vorgesehen ist.

## Claims

1. A fiber-optical cable having the following characteristics:

   a) the fiber-optical cable has a central support element (1);

   b) a plurality of optical fiber leads (2), each with at least one optical fiber (8), are twisted at least in intermittent regions around the support element (1), with a periodically varying direction of twist, wherein the optical fiber leads (2) are each disposed undulatingly around an imaginary baseline 6, wherein these baselines extend along the surface of the support element (1), and the optical fiber leads (2) repeatedly intersect the associated baseline (6), from the left and then from the right in alternation;

   c) a core winding (3) is disposed over the optical fiber leads (2);

   d) a cable sheath (5) is disposed over the core winding; characterized by the following other characteristics:

   e) the optical fiber leads are distributed over the circumference of the support element (1), spaced apart from one another;

   f) the optical fiber leads (2) are undulatingly twisted around the support element in such a way that they do not intersect the baselines (6) of adjacent optical fiber leads;

   g) the fixation of the optical fiber leads (2) on the support element (1) by the core winding (3) is effected such that an optical fiber lead (2) is removable over a length of several wave periods (L) from under the core winding, but the optical fiber leads (2) do not shift under the core winding (3) when the fiber-optical cable is being processed.

2. The fiber-optical cable of claim 1, characterized in that the baselines (6) are evenly distributed over the circumference of the support element (1).

3. The fiber-optical cable of one of claims 1 or 2, characterized in that the baselines (6) are disposed parallel to the longitudinal axis of the support element (1).

4. The fiber-optical cable of one of claims 1 or 2, characterized in that the baselines (6) are disposed helically on the surface of the support element (1).

5. The fiber-optical cable of one of the foregoing claims, characterized in that tension relief elements (4) are provided.

6. The fiber-optical cable of claim 5, characterized in that the tension relief elements (4) are integrated with the support element (1).

7. The fiber-optical cable of claim 5, characterized in that the tension relief elements (4) are mounted on the core winding (3).

8. The fiber-optical cable of one of the foregoing claims, characterized in that the interstices between the optical fiber leads (2) are filled with a gel or petroleum jelly (9).

9. The fiber-optical cable of one of the foregoing claims, characterized in that a foil is provided as the core winding (3).

## Revendications

1. Câble de fibres optiques comportant les éléments suivants :

   a) le câble de fibres optiques comporte un élément de support central (1) ;

   b) autour de l'élément de support (1) sont toronnés plusieurs brins de guides d'onde (2) comprenant chacun au moins un guide d'onde (LWL) (8) avec des directions de toronnage qui changent périodiquement au moins par région, les brins de guides d'onde (2) étant agencés de façon ondulée autour d'une ligne de base imaginaire respective (6), lesdites lignes de base (6) s'étendant le long de la surface de l'élément de support (1), et les brins de guides d'onde (2) croisant la ligne de base (6) associée respective toujours alternativement une fois depuis la gauche et une fois depuis la droite ;

   c) un bandage (3) est disposé par dessus les brins de guides d'onde (2) ;

   d) une enveloppe de câble (5) est agencée par dessus le bandage ; caractérisé par les autres éléments suivants :

e) les brins de guides d'onde sont répartis à distance les uns par rapport aux autres sur la périphérie de l'élément de support (1) ;

f) les brins de guides d'onde (2) sont toronnés autour de l'élément de support de façon ondulée de telle manière qu'ils ne croisent pas les lignes de base (6) appartenant à des brins de guides d'onde voisins ;

g) la fixation des brins de guides d'onde (2) sur l'élément de support (1) est assurée au moyen du bandage (3), de telle manière qu'un brin de guide d'onde (2) est susceptible d'être extrait sous le bandage (3) sur une longueur de quelques périodes d'onde (L), mais que lors de la préparation du câble de fibres optiques, les brins de guide d'onde (2) ne se déplacent pas sous le bandage (3).

2.  Câble de fibres optiques selon la revendication 1, caractérisé en ce que les lignes de base (6) sont réparties régulièrement à la périphérie de l'élément de support (1).

3.  Câble de fibres optiques selon l'une des revendications 1 ou 2, caractérisé en ce que les lignes de base (6) sont agencées parallèlement à l'axe longitudinal de l'élément de support (1).

4.  Câble de fibres optiques selon l'une ou l'autre des revendications 1 et 2, caractérisé en ce que les lignes de base (6) sont agencées en hélice sur la surface de l'élément de support (1).

5.  Câble de fibres optiques selon l'une quelconque des revendications précédentes, caractérisé en ce qu'il est prévu des éléments de décharge de traction (4).

6.  Câble de fibres optiques selon la revendication 5, caractérisé en ce que les éléments de décharge de traction (4) sont intégrés dans l'élément de support (1).

7.  Câble de fibres optiques selon la revendication 5, caractérisé en ce que les éléments de décharge de traction (4) sont placés sur le bandage (3).

8.  Câble de fibres optiques selon l'une quelconque des revendications précédentes, caractérisé en ce que les espaces intermédiaires entre les brins de guides d'onde (2) sont remplis avec un gel ou avec une vaseline (9).

9.  Câble de fibres optiques selon l'une quelconque des revendications précédentes, caractérisé en ce qu'il est prévu une feuille en tant que bandage (3).

Fig. 1

Fig. 2

Fig. 3

Fig. 4